# EUROPÄISCHE PATENTSCHRIFT

(11) **EP 1 054 769 B1**
(45) Veröffentlichungstag und Bekanntmachung des Hinweises auf die Patenterteilung: **19.12.2001**
(21) Anmeldenummer: 99907285.3
(22) Anmeldetag: 27.01.1999
(51) Int. Cl.: B41C 1/045, H04N 1/387, H04N 1/407

(54) **VERFAHREN ZUR GRAVUR VON DRUCKFORMEN**
METHOD FOR ENGRAVING PRINTING BLOCKS
PROCEDE POUR GRAVER DES CHASSIS D'IMPRIMERIE

(30) Priorität: 10.02.1998 DE 19805179
(43) Veröffentlichungstag der Anmeldung: 29.11.2000
(73) Patentinhaber: Heidelberger Druckmaschinen Aktiengesellschaft, 69115 Heidelberg (DE)
(72) Erfinder: BREIHOLDT, Jan, Herrmann, D-24106 Kiel (DE)
(86) Internationale Anmeldenummer: DE9900200
(87) Internationale Veröffentlichungsnummer: WO9941078

(56) Entgegenhaltungen:
- WO-A-96/26837
- CH-A- 681 929
- GB-A- 2 063 005
- GB-A- 2 100 093
- US-A- 4 852 485

## Beschreibung

Die Erfindung bezieht sich auf das Gebiet der elektronischen Reproduktionstechnik und betrifft ein Verfahren zur Gravur von Druckformen für den Tiefdruck auf einem Druckzylinder in einer elektronischen Graviermaschine.

In einer elektronischen Graviermaschine bewegt sich ein Gravierorgan mit einem Gravierstichel als Schneidwerkzeug in axialer Richtung an einem rotierenden Druckzylinder entlang. Der von einem Graviersteuersignal gesteuerte Gravierstichel schneidet eine Folge von in einem Gravurraster angeordneten Näpfchen in die Mantelfläche des Druckzylinders. Das Graviersteuersignal wird durch Überlagerung von Bildsignalwerten, welche die zu gravierenden Tonwerte zwischen "Licht" (Weiß) und "Tiefe" (Schwarz) repräsentiert, mit einem periodischen Rastersignal gebildet. Während das Rastersignal eine vibrierende Hubbewegung des Gravierstichels zur Erzeugung eines Gravurrasters bewirkt, bestimmen die Bildsignalwerte die geometrischen Abmessungen der in die Mantelfläche des Druckzylinders gravierten Näpfchen und damit die gravierten Tonwerte.

Damit die gravierten Näpfchen den durch die Bildsignalwerte vorgegebenen Tonwerten entsprechen, muß das Graviersteuersignal kalibriert werden. Dazu werden bei einer vor der eigentlichen Gravur der Druckform stattfindenden Probegravur, auch Probeschnitt oder Testcut genannt, Probenäpfchen für vorgegebene Tonwerte graviert und für die Kalibrierung ausgewertet.

Damit die Probenäpfchen auf dem Druckerzeugnis nicht sichtbar sind, müssen die Probenäpfchen beim Probeschnitt in einem Zylinderbereich, nachfolgend Probeschnittbereich oder Testcutbereich genannt, graviert werden, der sich nicht mit später zu gravierenden Elementen der Druckform überlappt.

Die Festlegung eines entsprechenden Probeschnittbereiches erfolgt bisher durch einen Bediener direkt an der Graviermaschine. Sofern ein ausreichender Zylinderrand zur Verfügung steht, ist die manuelle Festlegung eines Probeschnittbereiches unproblematisch. Fehlt jedoch ein genügend großer Zylinderrand, muß der Bediener visuell einen entsprechenden Probeschnittbereich möglichst genau zwischen den zu gravierenden Elementen der Druckform festlegen, was insbesondere bei Druckformen für den Verpackungsdruck schwierig ist, da eine solche Druckform eine Vielzahl von relativ kleinen Elementen aufweist.

Um Positionierungsfehler bei der manuellen Festlegung eines Probeschnittbereiches zu vermeiden, muß der Bediener sehr sorgfältig arbeiten, was zu verlängerten Vorbereitungszeiten für die Gravur führt. Die bekannte Vorgehensweise hat darüber hinaus den Nachteil, daß sie nicht in ausreichendem Maße für eine automatische Gravur von Druckzylindern geeignet ist.

Aufgabe der vorliegenden Erfindung ist es daher, ein Verfahren zur Gravur von Druckformen für den Tiefdruck auf einem Druckzylinder in einer elektronischen Graviermaschine derart zu verbessern, daß eine fehlerfreie Positionierung eines für den Probeschnitt geeigneten Probeschnittbereiches auf dem Druckzylinder automatisch erfolgt.

Dies Aufgabe wird durch die Merkmale des Anspruchs 1 gelöst. Vorteilhafte Weiterbildungen sind in den Unteransprüchen angegeben.

Die Erfindung wird nachfolgend anhand der Fig. 1 bis 3 näher erläutert.

Es zeigen:
Fig. 1 ein prinzipielles Blockschaltbild einer Graviermaschine für Druckzylinder,
Fig.2 ein Zylinderlayout und
Fig. 3 einen Probeschnittbereich.

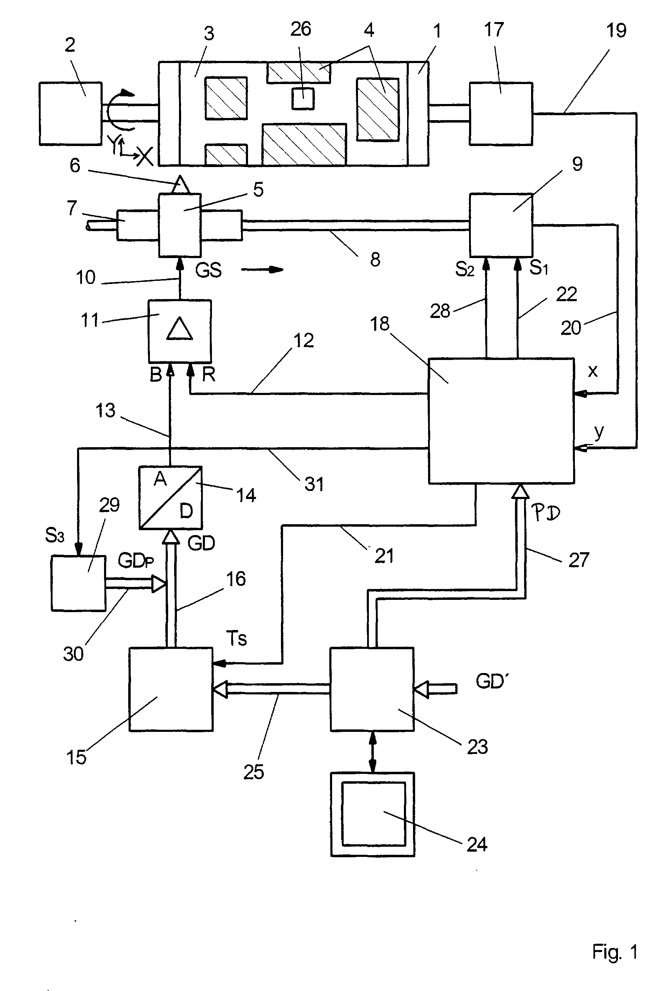

Fig. 1 zeigt ein prinzipielles Blockschaltbild einer Graviermaschine mit einem Druckzylinder (1), der von einem Zylinderantrieb (2) rotatorisch angetrieben wird.

Die Graviermaschine ist beispielsweise ein HelioKlischograph® der Firma Hell Gravure Systems GmbH, Kiel, DE.

Auf dem Druckzylinder (1) soll eine Druckform (3), die aus einzelnen nach einem Zylinderlayout zusammengesetzten und positionierten Elementen (4), Einzelnutzen genannt, besteht, mit einem Gravierorgan (5) graviert werden.

Das Gravierorgan (5), das beispielsweise als elektromagnetische Gravierorgane mit einem Gravierstichel (6) als Schneidwerkzeuge ausgebildet ist, befinden sich auf einem Gravierwagen (7), der mittels einer Spindel (8) durch einen Gravierwagenantrieb (9) in Achsrichtung des Druckzylinders (1) bewegbar ist.

Die Gravierstichel (6) des Gravierorgans (5) schneiden Gravierlinie für Gravierlinie eine Folge von in einem Gravurraster angeordneten Näpfchen in die Mantelfläche des rotierenden Druckzylinders (1), während sich der Gravierwagen (7) mit dem Gravierorgan (5) zur flächenhaften Gravur in Vorschubrichtung (Achsrichtung) an dem Druckzylinder (1) entlang bewegt. Die Gravur der Näpfchen erfolgt bei dem dargestellten Ausführungsbeispiel auf einzelnen, kreisförmig in Umfangsrichtung um den Druckzylinder (1) verlaufenden Gravierlinien, wobei der Gravierwagen (7) jeweils nach der Gravur einer Gravierlinie einen axialen Vorschubschritt zur nächsten Gravierlinie ausführt. Ein derartiges Gravierverfahren ist beispielsweise in der US-PS 4,013,829 beschrieben. Alternativ kann die Gravur der Druckform auch in einer helixförmig um den Druckzylinder (1) verlaufenden Gravierlinie erfolgen. In diesem Fall bewegt sich der Gravierwagen (7) während der Gravur kontinuierlich an dem Druckzylinder (1) entlang.

Der Gravierstichel (6) des Gravierorgans (5) wird durch ein Graviersteuersignal (GS) auf einer Leitung (10) gesteuert. Die Graviersteuersignal (GS) wird in einem Gravierverstärker (11) aus der Überlagerung eines periodischen Rastersignals (R) auf einer Leitung (12) mit einem Bildsignal (B) auf einer Leitung (13) gebildet, welches die Tonwerte der zu gravierenden Näpfchen zwischen "Licht" (Weiß) und "Tiefe" (Schwarz) repräsentiert. Während das periodische Rastersignal (R) eine vibrierende Hubbewegung der Gravierstichel (6) zur Erzeugung des Gravurrasters bewirkt, bestimmen die Bildsignalwerte (B) entsprechend den zu gravierenden Tonwerten die jeweiligen geometrischen Abmessungen wie Eindringtiefe, Querdiagonale und Längsdiagonale der in die Mantelfläche des Druckzylinders (1) gravierten Näpfchen.

Das analoge Bildsignal (B) wird in einem A/D-Wandler (14) aus den Gravurdaten (GD) der zu gravierenden Druckform (3) gewonnen. Jedem Gravierort für ein Näpfchen ist beispielsweise ein Gravurdatum von mindestens einem Byte zugeordnet, welches unter anderem als Gravierinformation die zu gravierenden Tonwerte zwischen "Tiefe" (GD = 161) und "Licht" (GD = 1) enthält. Die Gravurdaten (GD) sind in einem Gravurdatenspeicher (15) abgelegt, aus dem sie über eine Datenleitung (16) Gravierlinie für Gravierlinie ausgelesen und dem A/D-Wandler (14) zugeführt werden.

Die durch das Gravurraster vorgegebenen Gravierorte für die Näpfchen sind durch Ortskoordinaten (x, y) eines dem Druckzylinder (1) zugeordneten XY-Koordinatensystem definiert, dessen Y-Achse in Umfangsrichtung des Druckzylinders (1) (Gravierrichtung) und deren X-Achse in Achsrichtung des Druckzylinders (1) (Vorschubrichtung) orientiert sind. Ein mit dem Druckzylinder (1) mechanisch gekoppelter Positionsgeber (17) erzeugt die y-Ortskoordinaten und der Gravierwagenantrieb (9) die entsprechen x-Ortkoordinaten der Gravierorte auf dem Druckzylinder (1). Die Ortskoordinaten (x, y) werden über Leitungen (19, 20) einem Steuerwerk (18) zugeführt, welches den Gravurablauf steuert.

Das Steuerwerk (18) erzeugt unter anderem eine Lesetaktfolge (T_{S}) auf einer Leitung (21) zum Auslesen der Gravurdaten (GD) aus dem Gravurdatenspeicher (15), einen Steuerbefehl "Vorschub" (S₁) auf einer Leitung (22) zur Steuerung der Vorschubschritte des Gravierwagens (7) und das Rastersignal (R) auf der Leitung (12). Die Frequenz des Rastersignals (R) zusammen mit der Umfangsgeschwindigkeit des Druckzylinders (1) und der axialen Vorschubschrittweite des Gravierwagens (7) legen die Geometrie des Gravurrasters bezüglich Rasterwinkel und Rasterweite fest.

Ein Zylinderlayout legt die gewünschten Positionen der Einzelnutzen (4) in der Druckform (3) sowie Kontroll- und Steuerzeichen fest. Ein solches Zylinderlayout der Druckform (3) wird von einem Bediener off-line in einer Workstation (23) durch manuelles Positionieren der Einzelnutzen (4) mittels eines Cursors oder durch Eingabe von Positionskoordinaten unter Sichtkontrolle an einem Monitor (24) gestaltet. Anschließend werden dann in der Workstation (23) die Gravurdaten (GD) der Druckform (3) anhand des gestalteten Zylinderlayouts Gravierlinie für Gravierlinie aus den Gravurdaten (GD') der Einzelnutzen (4) zusammengerechnet.

Die Gravurdaten (GD') der Einzelnutzen (4) werden beispielsweise durch punktund zeilenweise optoelektronische Abtastung von Halbton- und Strichvorlagen mit einem Scanner und durch Montage der einzelnen Vorlagen in einer Bildverarbeitungsanlage gewonnen.

Zur Gestaltung des Zylinderlayouts und zum datenmäßigen Aufbau der Druckform (3) anhand des Zylinderlayouts kann beispielsweise die Workstation HelioCom ™ der Hell Gravure Systems GmbH, Kiel, DE, verwendet werden.

Die in der Workstation (23) generierten Gravurdaten (GD) der Druckform (3) werden über eine Datenleitung (25) in den Gravurdatenspeicher (15) transferiert, und die Gravur der Druckform (3) kann beginnen.

Vor der Gravur der Druckform (3) wird der Probeschnitt oder Testcut durch geführt, der mit der Festlegung und Positionierung eines geeigneten Probeschnittbereiches (26) auf dem Druckzylinder (1) zwischen den Einzelnutzen (4) der Druckform (3) beginnt.
Erfindungsgemäß erfolgt die Festlegung mindestens eines Probeschnittbereiches (26) bereits anhand des Zylinderlayouts bei der Erzeugung der Gravurdaten (GD) der Druckform (3) in der Workstation (23). Hierzu sind verschiedene Verfahrenswege denkbar.

Der Bediener legt eine bestimmte Größe des Probeschnittbereiches (26) als Anzahl von Gravurdaten (GD > 161) außerhalb des Wertebereiches zwischen "Licht" (GD = 1) und "Tiefe" (GD = 161) in X- und Y-Richtung fest. In der Workstation (23) wird dann mindestens ein Probeschnittbereich (26) entsprechender Größe durch einen automatischen Suchlauf im Bestand der Gravurdaten (GD) der Druckform (3) ermittelt und die Position des ermittelten Probeschnittbereiches (26) im Zylinderlayout markiert.

Alternativ dazu kann der Bediener unter Sichtkontrolle in dem auf dem Bildschirm des Monitor (24) der Workstation (23) sichtbar gemachten Zylinderlayout einen geeigneten Probeschnittbereich (26) auswählen und den ausgewählten Probeschnittbereich (26) auf dem Bildschirm durch eine Sonderfarbe mittels eines geeigneten Cursors oder durch Darstellung in einem speziellen Layer markieren.

Beim Transfer der Gravurdaten (GD) von der Workstation (23) in den Gravurdatenspeicher (15) wird dann der markierten Probeschnittbereich (26) identifiziert und die zugehörigen Positionsdaten (PD) des Probeschnittbereiches (26) im Zylinderlayout bzw. in der Gesamtdruckform (3) werden über eine Datenleitung (27) an das Steuerwerk (18) übermittelt und dort gespeichert. Alternativ dazu können die Positionsdaten (PD) auch zusammen mit den Gravurdaten (GD) in einem sogenannten Jobticket für eine spätere Gravur gespeichert werden.

Die Positionsdaten (PD) können beispielsweise die Koordinaten (x_{P}, yₚ) des Gravurstartpunktes für den Probeschnitt in einem Eckpunkt des Probeschnittbereiches (26) sowie die Breite (Δx_{P}) und Höhe (Δy_{P}) des Probeschnittbereiches (26) oder die Koordinaten (x_{P}, yₚ) der Eckpunkte des Probeschnittbereiches (26) sein.

Aus den Positionsdaten (PD) werden in dem Steuerwerk (18) ein Steuerbefehl "Gravierstartpunkt" (S₂) und ein Steuerbefehl "Probegravur" (S₃) abgeleitet. Mit dem Steuerbefehl "Startpunkt" (S₂) auf einer Leitung (28) an den Gravierwagenantrieb (9) wird der Gravierwagen (7) mit dem Gravierorgan (5) vor der Probegravur automatisch in axialer Richtung auf den Gravurstartpunkt des Probeschnittbereiches (26) verschoben.

Anschließend wird die Gravur der Probenäpfchen für vorgegebene Tonwerte auf dem Druckzylinder (1) innerhalb des festgelegten Probeschnittbereiches (26) gestartet. Die den vorgegebenen Tonwerten entsprechenden Gravurdaten (GD_{P}) zur Gravur der Probenäpfchen innerhalb des Probeschnittbereiches (26) werden in einem Probeschnittgenerator (29) Gravierlinie für Gravierlinie erzeugt und über eine Datenleitung (30) an den D/A-Wandler (14) gegeben. Während der Probegravur steuert der Steuerbefehl "Probeschnitt" (S₃)) auf einer Leitung (31) den Probeschnittgenerator (29) in der Weise, daß die für den Probeschnitt relevanten Gravurdaten (GDₚ) in jeder Gravierlinie nur für den Zeitraum an das Gravierorgan (5) weitergegeben werden, in dem sich der Gravierstichel (6) des Gravierorgans (5) innerhalb des Probeschnittbereiches (26) auf dem Druckzylinder (1) befindet.

Nach dem Probeschnitt werden die geometrischen Ist-Abmessungen der Probenäpfchen ermittelt und mit den geometrischen Soll-Abmessungen derjenigen Näpfchen verglichen, welche die für die Probegravur vorgegebenen Tonwerte repräsentieren. Aus dem Vergleich der geometrischen Abmessungen werden Einstellwerte gewonnen, mit denen das Graviersteuersignal (GS) in dem Gravierverstärker (19) derart kalibriert wird, daß die Näpfchen bei der späteren Gravur der Druckform tonwertrichtig erzeugt werden.

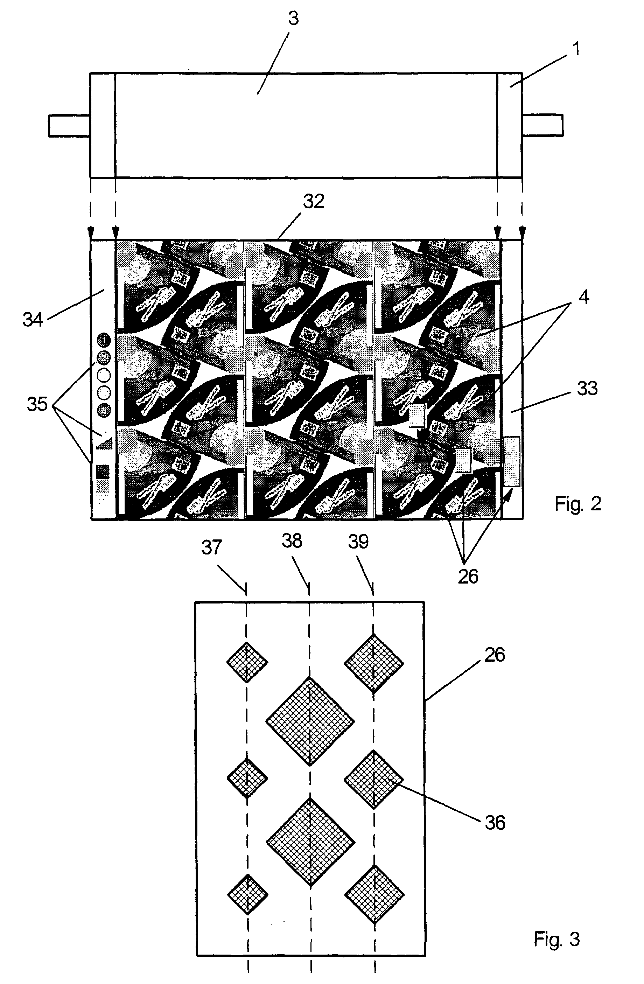

Fig. 2 zeigt ein praktisches Zylinderlayout (32) für die auf dem Druckzylinder (1) zu gravierende Druckform (3). In dem Zylinderlayout (32) sind mehrfach positionierte Einzelnutzen (4) mit zwischen den Einzelnutzen (4) oder an einem Rand (33) des Zylinderlayouts (32) liegenden Probeschnittbereichen (26) dargestellt. An dem anderen Rand (34) sind Kontroll- und Steuerzeichen (35) sichtbar, die auf der Druckform (3) mitgraviert werden sollen.

Fig. 3 zeigt einen Probeschnittbereich (26), in dem auf drei nebeneinander liegenden Gravierlinien Probenäpfchen (36) graviert wurden, und zwar auf der Gravierlinie (37) den Tonwert "Licht" repräsentierende Probenäpfchen (36), auf einer Gravierlinie (38) den Tonwert "Tiefe" repräsentierende Probenäpfchen (36) und auf der Gravierlinie (39) Probenäpfchen (36), die einem "Mittelton" entsprechen.

## Patentansprüche

1. Verfahren zur Gravur von Druckformen (3) für den Tiefdruck auf einem Druckzylinder (1) in einer elektronischen Graviermaschine mit einem durch ein Graviersteuersignal (GS) beaufschlagtem Gravierorgan (5), welches gravierlinienweise eine Folge von in einem Gravurraster angeordneten Näpfchen in den Druckzylinder (1) eingraviert, deren geometrische Abmessungen zu gravierende Tonwerte repräsentieren, bei dem
- die Positionen von zu gravierenden Elementen (4) in der Druckform (3) durch ein Zylinderlayout (32) festgelegt werden und
- während eines vor der Gravur der Druckform (3) stattfindenden Probeschnitts Probenäpfchen (36) innerhalb mindestens eines Probeschnittbereiches (26) in den Druckzylinder (1) eingraviert und deren geometrische Abmessungen zur Kalibrierung des Graviersteuersignals (GS) ausgewertet werden, **dadurch gekennzeichnet, daß** zur Vermeidung einer fehlerhaften Positionierung des Probeschnittbereiches (26) auf dem Druckzylinder (1) Größe und Lage des Probeschnittbereiches (26) anhand des Zylinderlayouts (32) ermittelt werden.

2. Verfahren nach Anspruch 1, **dadurch gekennzeichnet, daß**
- das Zylinderlayout (32) durch Positionieren der Elemente (4) in einer Workstation (23) unter Sichtkontrolle an einem Monitor (24) gestaltet wird und
- bei der Gestaltung des Zylinderlayouts (32) gleichzeitig der gewünschte Probeschnittbereich (26) nach Größe und Position in dem Zylinderlayout (32) markiert wird.

3. Verfahren nach Anspruch 2, **dadurch gekennzeichnet, daß** der gewünschte Probeschnittbereich (26) in dem Zylinderlayout (32) durch eine Sonderfarbe markiert wird.

4. Verfahren nach Anspruch 2, **dadurch gekennzeichnet, daß** der gewünschte Probeschnittbereich (26) in dem Zylinderlayout (32) durch einen speziellen Layer markiert wird.

5. Verfahren nach einem der Ansprüche 1 bis 4, **dadurch gekennzeichnet, daß**
- das Graviersteuersignal (GS) für das Gravierorgan (5) aus Gravurdaten (GD) gewonnen wird, wobei jedem Näpfchen ein Gravurdatum zugeordnet ist, welches einen Tonwert zwischen "Licht" und "Tiefe" repräsentiert,
- die Gravurdaten (GD) der zu gravierenden Druckform (3) aus den Gravurdaten (GD') der einzelnen innerhalb der Druckform (3) zu gravierenden Elementen (4) nach dem Zylinderlayout (32) generiert werden,
- der in dem Zylinderlayout (32) markierte Probeschnittbereich (26) bei der Generierung der Gravurdaten (GD) identifiziert wird und
- der identifizierte Probeschnittbereich (26) in entsprechende Positionsdaten (PD) umgewandelt wird.

6. Verfahren nach einem der Ansprüche 1 bis 4, **dadurch gekennzeichnet, daß**
- das Graviersteuersignal (GS) für das Gravierorgan (5) aus Gravurdaten (GD) gewonnen wird, wobei jedem Näpfchen ein Gravurdatum zugeordnet ist, welches einen Tonwert zwischen "Licht" und "Tiefe" repräsentiert,
- die Gravurdaten (GD) der zu gravierenden Druckform (3) aus den Gravurdaten (GD') der einzelnen innerhalb der Druckform (3) zu gravierenden Elementen (4) nach dem Zylinderlayout (32) generiert werden,
- die Größe des Probeschnittbereiches (26) vorgegeben wird,
- der Probeschnittbereich (26) mit der vorgegebenen Größe durch einen Suchlauf im Bestand der Gravurdaten (GD) der Druckform (3) ermittelt und markiert wird und
- der markierte Probeschnittbereich (26) in entsprechende Positionsdaten (PD) umgewandelt wird.

7. Verfahren nach Anspruch 5 oder 6, **dadurch gekennzeichnet, daß** die Positionsdaten (PD) die koordinatenmäßige Lage des Probeschnittbereiches (26) in der Druckform (3) auf dem Druckzylinder (1) definieren.

8. Verfahren nach einem der Ansprüche 5 bis 7, **dadurch gekennzeichnet, daß** die Positionsdaten (PD) der Graviermaschine zur Steuerung der Probegravur zugeführt werden.

9. Verfahren nach einem der Ansprüche 5 bis 8, **dadurch gekennzeichnet, daß**
- das Gravierorgan (5) zur flächenhaften Gravur in Achsrichtung des Druckzylinders (1) verschiebbar ist und
- das Gravierorgan (5) vor der Probegravur anhand der Positionsdaten (PD) auf den axialen Gravierstartpunkt des Probeschnittbereiches (26) positioniert wird.

10. Verfahren nach einem der Ansprüche 5 bis 9, **dadurch gekennzeichnet, daß** die Positionsdaten (PD) beim Probeschnitt die Gravur der Probenäpfchen (36) innerhalb des Probeschnittbereiches (26) steuern.

11. Verfahren nach Anspruch 5 oder 6, **dadurch gekennzeichnet, daß** die Positionsdaten (PD) zusammen mit den Gravurdaten (GD) einer Druckform (3) für eine spätere Verwendung abgespeichert werden.

12. Verfahren nach einem der Ansprüche 1 bis 11, **dadurch gekennzeichnet, daß** bei der Probegravur
- Probenäpfchen (36) für vorgegebene Tonwerte graviert werden,
- die geometrischen Ist-Abmessungen der gravierten Probenäpfchen (36) ausgemessen und mit den Soll-Abmessungen der vorgegebenen Tonwerte verglichen werden und
- aus dem Vergleich Einstellwerte zur Kalibrierung des Graviersteuersignals gewonnen werden.

13. Verfahren nach Anspruch 12, **dadurch gekennzeichnet, daß** für die Probegravur Tonwerte für "Licht" und "Tiefe" vorgegeben werden.

14. Verfahren nach Anspruch 13, **dadurch gekennzeichnet, daß** für die Probegravur zusätzlich mindestens einen "Mittelton" vorgegeben wird.

15. Verfahren nach einem der Ansprüche 12 bis 14, **dadurch gekennzeichnet, daß** auf jeder Gravierlinie innerhalb des Probeschnittbereiches (26) mindestens ein Probenäpfchen (36) pro vorgegebenem Tonwert graviert wird.

## Claims

1. Method for the engraving of formes (3) for intaglio printing on a printing cylinder (1) in an electronic engraving machine by means of an engraving head (5) which, in response to an engraving control signal (GS), engraves in the printing cylinder (1), line by line, a series of cells arranged in an engraving screen and whose geometrical dimensions represent tonal values to be engraved, wherein
- the positions within the forme (3) of elements (4) to be engraved are defined by a cylinder layout (32) and
- during a Testcut which takes place before the forme (3) is engraved, trial cells (36) are engraved in the printing cylinder (1) within at least one Testcut area (26) and their geometrical dimensions are analysed in order to calibrate the engraving control signal (GS), **characterized in that**, to avoid incorrect positioning of the Testcut area (26) on the printing cylinder (1), the size and location of the Testcut area (26) are determined from the cylinder layout (32).

2. Method according to Claim 1, **characterized in that**
- the cylinder layout (32) is designed by positioning the elements (4) in a workstation (23) with visual checking on a monitor (24) and
- during the design of the cylinder layout (32), the desired Testcut area (26) is simultaneously marked as to size and position in the cylinder layout (32).

3. Method according to Claim 2, **characterized in that** the desired Testcut area (26) is marked in the cylinder layout (32) by a special colour.

4. Method according to Claim 2, **characterized in that** the desired Testcut area (26) is marked in the cylinder layout (32) by a special layer.

5. Method according to any one of Claims 1 to 4, **characterized in that**
- the engraving control signal (GS) for the engraving head (5) is derived from gravure data (GD), a gravure datum which represents a tonal value between "high light" and "shadow" being assigned to each cell,
- the gravure data (GD) of the forme (3) to be engraved are generated from the gravure data (GD') of the individual elements (4) to be engraved within the forme (3) in accordance with the cylinder layout (32),
- the Testcut area (26) marked in the cylinder layout (32) is identified in the generation of the gravure data (GD) and
- the identified Testcut area (26) is converted into corresponding position data (PD).

6. Method according to any one of Claims 1 to 4, **characterized in that**
- the engraving control signal (GS) for the engraving head (5) is derived from gravure data (GD), a gravure datum which represents a tonal value between "high light" and "shadow" being assigned to each cell,
- the gravure data (GD) of the forme (3) to be engraved are generated from the gravure data (GD') of the individual elements (4) to be engraved within the forme (3) in accordance with the cylinder layout (32),
- the size of the Testcut area (26) is specified,
- the Testcut area (26) of the specified size is located and marked by a search run through the gravure database (GD) of the forme (3) and
- the marked Testcut area (26) is converted into corresponding position data (PD).

7. Method according to Claim 5 or 6, **characterized in that** the position data (PD) define the location within the system of coordinates of the Testcut area (26) in the forme (3) on the printing cylinder (1).

8. Method according to any one of Claims 5 to 7, **characterized in that** the position data (PD) of the engraving machine are fed to the control of the test engraving.

9. Method according to any one of Claims 5 to 8, **characterized in that**
- the engraving head (5) is shiftable in the axial direction of the printing cylinder (1) for area engraving and
- the engraving head is positioned at the axial engraving-start point of the Testcut area (26) by means of the position data (PD) prior to the test engraving.

10. Method according to any one of Claims 5 to 9, **characterized in that** during the Testcut the position data (PD) control the engraving of the test cells (36) within the Testcut area (26).

11. Method according to Claim 5 or 6, **characterized in that** the position data (PD) together with the gravure data (GD) of a forme (3) are stored for later use.

12. Method according to any one of Claims 1 to 11, **characterized in that** in the test engraving
- test cells (36) for specified tonal values are engraved,
- the actual geometrical dimensions of the engraved test cells (36) are measured and compared with the nominal dimensions of the specified tonal values and
- setting values for calibration of the engraving control signal are derived from the comparison.

13. Method according to Claim 12, **characterized in that** tonal values for "high light" and "shadow" are specified for the test engraving.

14. Method according to Claim 13, **characterized in that** at least one "mid tone" is additionally specified for the test engraving.

15. Method according to any one of Claims 12 to 14, **characterized in that** at least one test cell (36) per specified tonal value is engraved on each engraving line within the Testcut area (26).

## Revendications

1. Procédé de gravure de formes d'impression (3) pour l'impression en taille douce sur un cylindre d'impression (1) dans une machine de gravure électronique, comprenant un organe de gravure (5) recevant un signal de commande de gravure (GS), cet organe gravant ligne par ligne une succession de cuvettes réparties suivant une trame de gravure dans le cylindre d'impression (1), et les dimensions géométriques des cuvettes représentant des valeurs de teintes à graver, selon lequel
- on fixe les positions des éléments (4) à graver dans la matrice d'impression (3) par une implantation de cylindre (32) et
- pendant un segment d'essai produit avant la gravure de la forme d'impression (3), on grave des cuvettes échantillons (36) dans au moins une zone échantillon (26) dans le cylindre d'impression (1) et on exploite les dimensions géométriques pour calibrer le signal de commande de gravure (GS),
**caractérisé en ce que**
pour éviter un positionnement erroné de la zone de segment d'essai (26) sur le cylindre d'impression (1), on détermine la taille et la longueur de la zone de segment d'essai (26) à l'aide de l'implantation de cylindre (32).

2. Procédé selon la revendication 1,
**caractérisé en ce qu'**
- on réalise l'implantation (32) du cylindre par le positionnement des éléments (4) dans un poste de travail (23) en contrôlant visuellement un moniteur (24) et
- pour une conception de l'implantation (32) du cylindre on marque en même temps la zone d'essai (26) souhaité suivant la taille et la position dans la conception de cylindre (32).

3. Procédé selon la revendication 2,
**caractérisé en ce qu'**
on marque la zone d'essai (26) dans la conception de cylindre (32) avec une couleur particulière.

4. Procédé selon la revendication 2,
**caractérisé en ce que**
le segment d'essai (26) souhaité est marqué par une couche spéciale dans l'implantation de cylindre (32).

5. Procédé selon l'une quelconque des revendications 1 à 4,
**caractérisé en ce qu'**
- on obtient le signal de commande de gravure (GS) destiné à l'organe de gravure (5) à partir des données de gravure (GD) et à chaque cuvette on associe une donnée de gravure représentant une valeur de teinte entre « lumière » et « profondeur »,
- on génère les données de gravure (GD) de la forme d'impression (3) à graver à partir des données de gravure (GD') des différents éléments à graver (4) dans la forme d'impression (3), selon l'implantation (32) du cylindre,
- la zone d'essai (26) marquée dans l'implantation de cylindre (32) est identifiée lorsqu'on génère les données de gravure (GD) et
- on convertit la zone d'essai (26) identifiée en des données de position correspondantes (PD).

6. Procédé selon l'une quelconque des revendications 1 à 4,
**caractérisé en ce qu'**
- on obtient le signal de commande de gravure (GS) pour l'organe de gravure (5) à partir de données de gravure (GD), et chaque cuvette est associée à une donnée de gravure représentant une valeur de teinte comprise entre « lumière » et « profondeur »,
- on génère les données de gravure (GD) de la matrice d'impression (3) à graver à partir des données de gravure (GD') des différents éléments (4) à graver dans la forme d'impression (3), selon l'implantation (32) du cylindre,
- on prédétermine la taille de la zone d'essai (26),
- on marque la zone d'essai (26) avec la taille prédéterminée par une recherche dans l'état des données de gravure (GD) de la forme d'impression (3) et on marque et
- on convertit la zone d'essai (26), marquée, en des données de position correspondantes (PD).

7. Procédé selon l'une quelconque des revendications 5 ou 6,
**caractérisé en ce que**
les données de position (PD) définissent la position en coordonnées de la zone d'essai (26) dans la forme d'impression (3) sur le cylindre d'impression (1).

8. Procédé selon l'une quelconque des revendications 5 à 7,
**caractérisé en ce qu'**
on fournit les données de position (PD) de la machine à graver pour commander la gravure d'essai.

9. Procédé selon l'une quelconque des revendications 5 à 8,
**caractérisé en ce qu'**
- on coulisse l'organe de gravure (5) pour graver en surface dans la direction axiale du cylindre d'impression (1) et
- on positionne l'organe de gravure (5) avant la gravure d'essai à l'aide des données de position (PD) sur le point de départ de gravure, axial de la zone d'essai (26).

10. Procédé selon l'une quelconque des revendications 5 à 9,
**caractérisé en ce que**
les données de position (PD) commandent la gravure de la cuvette échantillon (36) dans la zone d'essai (26) lors de l'essai.

11. Procédé selon l'une quelconque des revendications 5 ou 6,
**caractérisé en ce qu'**
on mémorise les données de position (PD) avec les données de gravure (GD) d'une forme d'impression (3) pour les utilisations ultérieures.

12. Procédé selon l'une quelconque des revendications 1 à 11,
**caractérisé en ce que**
lors de la gravure d'essai :
- on grave des cuvettes échantillons (36) pour des valeurs de teintes prédéterminées,
- on mesure les dimensions réelles géométriques des cuvettes échantillons (36) à graver et on les compare à des dimensions de consignes des valeurs de teintes prédéterminées et
- à partir de la comparaison on forme des valeurs de réglage pour calibrer le signal de commande de gravure.

13. Procédé selon la revendication 12,
**caractérisé en ce qu'**
on prédétermine les valeurs de teintes pour « lumière » et « profondeur » pour la gravure échantillon.

14. Procédé selon la revendication 13,
**caractérisé en ce qu'**
on prédétermine au moins une « teinte moyenne » en plus pour la gravure échantillon.

15. Procédé selon l'une quelconque des revendications 12 à 14,
**caractérisé en ce que**
sur chaque ligne de gravure, dans la zone de segment d'essai (26), on grave au moins une cuvette échantillon (36) par valeur de teinte prédéterminée.
